# EUROPÄISCHE PATENTSCHRIFT

(11) **EP 4 153 017 B1**
(45) Veröffentlichungstag und Bekanntmachung des Hinweises auf die Patenterteilung: **07.05.2025**
(21) Anmeldenummer: 21727388.7
(22) Anmeldetag: 14.05.2021
(51) Int. Cl.: A47K 5/12

(54) **BEHÄLTERAUFNAHMEVORRICHTUNG UND HALTERUNG HIERZU**
CONTAINER RECEIVING DEVICE AND HOLDER FOR SAME
DISPOSITIF DE RÉCEPTION DE RÉCIPIENT ET SON SUPPORT

(30) Priorität: 19.05.2020 DE 102020113515
(43) Veröffentlichungstag der Anmeldung: 29.03.2023
(73) Patentinhaber: Krömker Holding GmbH, 31675 Bückeburg (DE)
(72) Erfinder: KRÖMKER, Wilfried, 31675 Bückeburg (DE)
(74) Vertreter: Kröncke, Rolf
(86) Internationale Anmeldenummer: PCT/EP2021/062812
(87) Internationale Veröffentlichungsnummer: WO 2021/233776

(56) Entgegenhaltungen:
- KR-A- 20130 033 913
- US-A1- 2012 181 405

## Beschreibung

Die Erfindung betrifft eine Behälteraufnahmevorrichtung zur Aufnahme eines Behälters, wobei die Behälteraufnahmevorrichtung ein erstes Gehäuseteil in Form eines Behälterträgers und ein zweites Gehäuseteil in Form eines Deckelteils aufweist, wobei der Behälter in dem Behälterträger aufnehmbar und mit dem im zusammengeklappten Zustand den Behälter frontseitig abdeckenden Deckelteil an dem Behälterträger festlegbar ist, wobei der Behälterträger und das Deckelteil miteinander zusammenwirkende Rastelemente haben, die als Rastlaschen und dazu passende Rastlager ausgebildet sind.

Insbesondere kann die Vorrichtung zur Aufnahme eines Desinfektionsmittelbehälters bzw. Desinfektionsmittelspenders sein. Derartige Desinfektionsmittelbehälters werden grundsätzlich über eine oben genannte Vorrichtung an dem für Ihn bestimmten Einsatzort fest verschraubt.

US 2012/0181405 A1 offenbart ein Flaschenmontagesystem, das einen Flaschenhalter und eine Klemme umfasst. Die Klemme kann an einer Vielzahl von Stützelementen montiert werden, um eine Klemmenhalterung bereitzustellen, die sich entweder von einer vertikalen Oberfläche der Klemme oder einer horizontalen Oberfläche der Klemme erstreckt. Der Flaschenhalter verfügt sowohl über eine hintere als auch eine untere Halterung, die je nach Ausrichtung der Klemmhalterung wahlweise an der Klemmhalterung montiert werden können. Sowohl die hintere Halterung als auch die untere Halterung des Flaschenhalters können in mehreren Ausrichtungen mit der Klemmhalterung verbunden werden, so dass es eine große Anzahl unterschiedlicher Konfigurationen gibt, in denen das Flaschenmontagesystem implementiert werden kann.

KR 2013 0033913 A offenbart eine Vakuum-Saughalterung zur Befestigung eines Klebeelements an der Unterseite einer Adsorptionsplatte der Vakuum-Saughalterung. Die Vakuum-Saughalterung besteht aus einer Abdeckung, einem Höheneinstellelement und einer Saughalteplatte. Das Höheneinstellelement umfasst eine Bodenplatte, eine Seitenplatte und mehrere elastische Verriegelungsstücke. Die Saughalteplatte wird durch Vakuum auf der Oberfläche eines Glases oder einer Fliese befestigt. In der Mitte der Bodenfläche der Saughalteplatte sind Formationsvorsprünge gebildet, die in den Montageoberflächen in Kontakt stehen. Ein Klebeelement wird auf der Unterseite der Saughalteplatte und der befestigten Oberfläche befestigt. In der Mitte des Klebeelements ist ein Durchgangsloch zum Schaffen eines Raums zwischen der Saughalteplatte und der Montageoberfläche ausgebildet.

Ausgehend hiervon ist es Aufgabe der vorliegenden Erfindung eine verbesserte Behälteraufnahmevorrichtung zu schaffen.

Die Aufgabe wird mit einer Behälteraufnahmevorrichtung mit den Merkmalen des Anspruchs 1 gelöst. Vorteilhafte Ausführungsformen sind in den Unteransprüchen beschrieben.

Bei der gattungsgemäßen Behälteraufnahmevorrichtung wird vorgeschlagen, dass zumindest eines der beiden Gehäuseteile mehrere in einer gemeinsamen Flucht im Abstand voneinander angeordnete Rastelemente hat, die jeweils zur Verrastung eines Paares von Rastlasche und Rastlasche ausgebildet sind, wobei an dem Behälterträger oder an dem Deckelteil eine erste Anzahl von Rastlaschen in einer gemeinsamen Flucht in einem gleichen Abstandsmaß zwischen zwei benachbarten Rastlaschen angeordnet ist und an dem jeweils anderen Gehäuseteil eine zur ersten Anzahl von Rastlaschen größere Anzahl an Rastlagern in einer gemeinsamen Flucht in einem gleichen Abstandsmaß zwischen zwei benachbarten Rastlagern angeordnet ist und das Deckelteil wahlweise in unterschiedlichen Kombinationen jeweils eines Rastelementes eines Gehäuseteils mit dem dazu passenden Rastelement der in einer Flucht im Abstand voneinander angeordneten Rastelementen des anderen Gehäuseteils zusammensteckbar ist, so dass die Lage der Oberkante des Deckelteils in Bezug auf die Oberkante des Behälterträgers in Richtung der Flucht der mehreren im Abstand voneinander angeordnete Scharnierelemente veränderbar ist, und dass das Deckelteil einen im auf den Behälterträger aufgesteckten und zugeklappten Zustand zum Behälterträger hin ragenden Kragen hat, um einen aufgenommen Behälter in Richtung der Flucht festzulegen.

Durch die Ausbildung einer Mehrzahl von Rastelementen, die jeweils zur Verrastung eines Paares von Rastlasche und Rastlager ausgebildet sind, kann eine modular einstellbare Behälteraufnahmevorrichtung bereitgestellt werden, die zur Aufnahme von Behältern unterschiedlicher Größe eingerichtet ist. Das Deckelteil kann auf diese Weise in unterschiedlichen Positionen an dem Behälterträger angerastet und damit an in Bezug auf den Boden des Behälterträgers unterschiedlich hohe Behälter angepasst werden. Dies gelingt dadurch, dass an dem Behälterträger oder dem Deckelteil mehrere Rastelemente in einer gemeinsamen Flucht im Abstand voneinander zur Variation der Verrastung mit jeweils einem komplementären Rastelement angeordnet sind.

Das Deckelteil ist dabei frontseitig auf den Behälterträger aufgesteckt und **k**ann beidseitig verrastet werden, ohne dass das Decklteil verschwenkbar ist Vorteilhaft ist es jedoch, wenn die Rastlaschen und die Rastausnehmungen derart ausgebildet sind, dass das Deckelteil in Bezug auf den Behälterträger verschwenkbar an dem Behälterträger anrastbar ist. Die miteinander verrasteten komplementären Rastelemente bilden somit ein Schwenkgelenk.

Durch die verschwenkbare Ausbildung des Dekelteilsteils relativ zu dem Behälterträger kann der Behälter auf leichte Weise entfernt oder ausgetauscht werden. Das Deckelteil und der Behälterträger müssen somit nicht voneinander gelöst werden. Dabei können zum Beispiel die Rastlaschen und die Rastlager derart ausgebildet sein, dass diese scharnierartig zusammenwirken. So wird eine Art Türmechanismus bereitgestellt, um den Raum zwischen dem Behälterträger und dem Deckelteil für den Anwender zugänglich zu machen.

Eines der Gehäuseteile weist eine Mehrzahl von in einer gemeinsamen Flucht im Abstand voneinander angeordneten Rastlagern auf, die Ausnehmungen in diesem Gehäuseteil zur Aufnahme jeweils einer Rastlasche und eine Scharnierachse haben, wobei die mindestens eine Rastlasche des anderen Gehäuseteils in Form einer Scharnierbuchse ausgebildet ist, die mindestens eine Scharnierachse mindestens teilweise umgreift und ein Scharniergelenk bildet. Mit Hilfe der Ausnehmungen und der Scharnierachse wird ein Gelenk mit dem zum Verschwenken des Deckelteils notwendigen Freiraum gebildet. Die Rastlager können als umfangsseitig nicht vollständige geschlossene Schanierbuchsen (z. B. in Form von Hülsen) ausgebildet sein, die durch elastische Verformung auf die Scharnierachse aufgeclipst dann im Formschluss an der Scharnierachse festgelegt werden. Denkbar ist auch eine Variante, bei der die Scharnierachse in Richtung ihrer Längsachse verlagert wird, um zur Verrastung in eine Öffnung des Rastlagers hineingeführt zu werden, um einen Formschluss mit dem Rastlager zu bilden.

Unter dem Begriff "Verrasten" wird die Bildung eines Formschlusses im weitesten Sinne verstanden.

Ein Behälter kann insbesondere ein Behälter für Desinfektionsmittel oder ein Tropfbehälter für die medizinische Versorgung sein. Der Behälter kann an seiner oberen Stirnseite, die dem Boden des Behälterträgers im eingesetzten Zustand gegenüberliegt, einen Behälterauslass haben. Dieser kann einen Pumpmechanismus aufweisen, der einen Spender bildet. Da es unterschiedliche Größen von Behältern, wie bspw. Desinfektionsmittelbehältern gibt, kann die erfindungsgemäße Behälteraufnahmevorrichtung auf die jeweilige Größe bspw. des Desinfektionsmittelbehälters angepasst werden, indem die Rastlasche mit dem korrespondierenden Rastlager verrastet, so dass der Raum zwischen dem Behälterträger und dem zweiten Gehäuseteil der Größe des Behälters, insbesondere des Desinfektionsmittelbehälters, entspricht. Dabei ist denkbar, dass die Anzahl der Rastlager größer ist als die Anzahl der Rastlaschen. Auf diese Weise kann durch Umstecken der Rastlaschen in ein anderes Rastlager der Raum zwischen dem Behälterträger und dem Deckelteil auf die Größe (insbesondere auf die Höhe) des entsprechenden Behälters angepasst werden. Die mehreren Rastelemente sind in einer Flucht im Abstand voneinander angeordnet, die der Längserstreckungsrichtung des in den Behälterträger eingesetzten und auf dem Boden des Behälterträgers aufgelagerten Behälters entspricht, d. h. vom Boden gesehen in Richtung der Höhe des Behälters. Durch die Anordnung der Rastausnehmung in Längserstreckungs- bzw. Höhenrichtung kann so insbesondere eine Variation des Raumes für den Behälter in der Größe bzw. Längserstreckungsrichtung bereitgestellt werden.

An dem Behälterträger oder am Deckelteil können bspw. drei Rastlaschen in einer gemeinsamen Flucht angeordnet sein, wobei an dem jeweils anderen Gehäuseteil vier Rastlager in einer gemeinsamen Flucht angeordnet sind. Es hat sich gezeigt, dass insbesondere bei drei Rastlaschen und vier Rastausnehmungen die Vorrichtung an die Größe eines entsprechenden Behälters angepasst werden kann und zugleich eine stabile und sichere Verrastung gewährleistet.

Die Behälteraufnahmeorrichtung kann ein Verriegelungselement haben, wobei das Verriegelungselement dazu eingerichtet ist, das Deckelteil an dem Behälterträger zu verriegeln und damit ein Öffnen des Deckelteils zu erschweren.

Verriegeln bedeutet insbesondere, dass die beiden Gehäuseteile nicht voneinander ohne Einwirkung von außen getrennt werden können. Das Deckelteil kann somit nicht mehr ohne äußere Einwirkung von dem Behälterträger gelöst werden, wobei ein unbeabsichtigtes Öffnen der Vorrichtung oder ein Entwenden des Behälters aus der Vorrichtung durch Dritte verhindert oder zumindest erschwert werden kann.

Der Behälterträger kann wenigstens ein erstes Befestigungselement zur Befestigung des Behälterträgers an einer Halteklaue und wenigstens ein zweites Befestigungselement zur Befestigung des Behälterträgers an einer Wand haben. Hierzu kann die Behälteraufnahmevorrichtung beispielsweise wenigstens ein Befestigungsloch haben, durch das jeweils eine Befestigungsschraube hindurchführbar ist. Die Befestigungsschraube legt den Behälterträger in dem eingeschraubten Zustand mittels des Schraubgewindes und des Schraubenkopfes durch Form- und ggf. Kraftschluss an dem Gegenlager fest. Das Gegenlager kann dabei wahlweise eine Wand, ein Träger oder ein Spannelement sein, an dem der Behälterträger montierbar ist.

Durch das Befestigungsloch kann die Behälteraufnahmevorrichtung somit zum Beispiel über ein Befestigungsmittel wie eine Schraube an einer Wand befestigt werden. Wahlweise kann die Behälteraufnahmevorrichtung aber auch an einer Spannklaue befestigt werden, wobei die Spannklaue auf einfache Weise montiert und demontiert werden kann, wodurch die Vorrichtung flexibel eingesetzt werden kann. Insbesondere Desinfektionsmittelbehälter können so leicht an den verschiedensten örtlichen Gegebenheiten montiert und bereitgestellt werden.

Für die unterschiedlichen Montagearten kann der Behälterträger dieselben Befestigungselemente, wie bspw. Befestigungslöcher, haben. Denkbar ist aber auch, dass für unterschiedliche Montagearten unterschiedliche Befestigungselemente vorhanden sind. Diese können jeweils in Gruppen räumlich an die Montageart angepasst an dem Behälterträger angeordnet sein.

Die Behälteraufnahmevorrichtung kann mit einer Halterung variabel fixiert werden. Hierzu weist die Halterung ein erstes Halteteil, das an der Behälteraufnahmevorrichtung besfestigt ist, ein zweites Halteteil und mindestens ein Anschlagelement auf. Das mindestens eine Anschlagelement weist ein federelastisch bewegliches Rastelement auf und ist mit einem der Halteteile drehfest verbindbar oder verbunden. Das andere Halteteil kann eine Mehrzahl von Rastkonturen haben. Die beiden Halteteile können miteinander verbunden und über eine gemeinsame Drehachse relativ zueinander verdrehbar angeordnet sein. Die Halteteile sind wahlweise in mehreren Rastpositionen durch Eingriff jeweils eines federelastisch beweglichen Rastelementes in eine der Rastkonturen miteinander verrastbar.

Bei der Halterung wird vorgeschlagen, dass eines der Halteteile relativ zu dem Anschlagelement drehbar ausgebildet ist.

Auf diese Weise kann eine in mindestens einer Rastpositon ortsfest gesicherte Halterung bereitgestellt werden, wobei eines der Haltteile zudem drehbar ausgebildet ist, um nach Überwindung der Rastverbindung zum Beispiel die oben beschriebene Behälteraufnahmevorrichtung zur Aufnahme eines Behälters, insbesondere eines Desinfektionsmittelbehälters, wahlweise in einer durch die Rastpositionen vordefinierten Schwenkpositon fixieren und einstellen zu können.

Die feste Verbindung zwischen dem Anschlagelement und dem anderen Halteteil bedeutet insbesondere, dass keine Relativbewegung zwischen diesen beiden Bauteilen möglich ist.

Dabei ist denkbar, dass die Halterung zum Beispiel vier Rastpositionen hat, so dass jeweils ein federelastisch bewegliches Rastelement mit vier verschiedenen Rastkonturen verrastbar ist. Die Rastkonturen können zum Beispiel als korrespondierende Ausnehmungen zu Federlaschen ausgebildet sein, so dass zumindest ein Teil der Federlasche in der Rastposition in der Ausnehmung aufgenommen ist.

Das zweite Halteteil kann zum Beispiel zur Montage an einer Spannklaue, an einem Träger oder einer Wand ausgebildet sein. Das zweite Halteteil dient somit insbesondere zur weiteren Befestigung an einem gewünschten Montageort.

Drehbar bedeutet insbesondere, dass das erste Halteteil relativ zu dem Anschlagelement um den Umfang des bspw. kreisförmigen Anschlagelementes drehbar gelagert ist.

Die federelastisch beweglichen Rastelemente können in einem gleichen Abstand voneinander um den Umfang des Anschlagstückes verteilt angeordnet sein. Ferner vorteilhaft können an dem Anschlagstück über den Umfang verteilt vier elastisch auslenkbare Rastelemente angeordnet sein, wie bspw. Federlaschen (d. h. Federarme).

So kann ein selbsttragender Rastmechanismus mit vier Rastpositionen bereitgestellt werden. Diese sind vorzugsweise jeweils in einem Abstand von 90° in Bezug auf den Umfang des kreisförmigen Anschlagelementes zueinander angeordnet, so dass das erste Halteteil relativ zu dem Anschlagelement um 90° drehbar gelagert ist, wobei nach einer Drehung um 90° die Federlaschen mit den jeweiligen Rastelementen verrasten, wobei das erste Halteteil selbsttragend gehalten wird.

Das erste Halteteil kann an einer der oben beschriebenen Behälteraufnahmevorrichtung angeordnet sein.

Auf diese Weise kann eine Behälteraufnahmevorrichtung bereitgestellt werden, die in Abhängigkeit Ihres Montageortes und/oder Einsatzortes flexibel verschwenkbar ist und gleichzeitig variabel an die Größe eines entsprechenden Behälters angepasst werden kann. Somit kann die Vielfältigkeit der erfindungsgemäßen Behälteraufnahmevorrichtung und deren Einsatzmöglichkeiten weiter verbessert werden. So ist zum Beispiel denkbar, dass die Behälteraufnahmevorrichtung um 90°, 180° oder 270° durch die Halterung gedreht werden kann. Damit kann beispielsweise die Lage des Behälterauslasses an den Bedarf angepasst werden.

Beispielsweise bei einer Spannklaue hängt die Ausrichtung davon ab, ob bspw. eine horizontale oder vertikale Haltestange vorhanden ist. Durch die Variabilität des Schwenkwinkels der Halterung mittels der in vorgegebenen Rastpositionen verrastbaren Anschlagelementes kann die Ausrichtung der Behälteraufnahmevorrichtung werkzeuglos und schnell an die Ausrichtung der verfügbaren Haltestange angepasst werden.

Es ist aber auch denkbar, dass das erste Halteteil an einer anderen Vorrichtung angeordnet ist, bei der eine variable Fixierung vorteilhaft ist.

Das zweite Halteteil kann an einem Spannelement montierbar sein.

So kann die Modularität der erfindungsgemäßen Halterung und auch der erfindungsgemäßen Behälteraufnahmevorrichtung weiter verbessert werden, indem das zweite Halteteil zum Beispiel an einer Spannklaue montiert ist, wobei das erste Halteteil zum Beispiel an der erfindungsgemäßen Behälteraufnahmevorrichtung angeordnet ist. Auf diese Weise kann die Behälteraufnahmevorrichtung durch die Spannklaue montiert und demontiert werden, wobei je nach Montageort die Behälteraufnahmevorrichtung durch die Halterung variabel in eine benötigte Position verschwenkbar gelagert ist, um eine flexible Montage zu erreichen. Zudem kann dadurch die Vorrichtung auch schnell montiert und demontiert werden, was unter anderem bei mobilen Anlagen, deren Einsatzorte flexibel gestaltet sind, vorteilhaft ist. Es ist aber auch denkbar, dass das zweite Halteteilt an einem Wandabschnitt montierbar ist.

Das Anschlagelement kann kreisförmig ausgebildet sein und über den Umfang verteilt angeordnete elastisch auslenkbare Federlaschen haben, welche die federelastischen, beweglichen Rastelemente bilden. Die Federlaschen sind jeweils mit korrespondierendem Rastkonturen des ersten Halteteils verrastbar sind

Die elastisch auslenkbaren Federlaschen können bogenförmig von dem Anschlagstück abragen. Ferner vorteilhaft ist es, wenn die elastisch auslenkbaren Federlaschen im Wesentlichen parallel zum Anschlagstück von dem Anschlagstück abragen.

Auf diese Weise kann eine platzsparendes Halterung bereitgestellt werden, indem das Anschlagstück und die daran angeordneten Federlaschen platzsparend zueinander angeordnet sind.

Die federelastisch beweglichen Rastelemente können aber auch Druckfedern haben, die in einem der Haltteile gelagert sind, und an den Druckfedern angeordnete und bei der federelastischen Auslenkung der jeweiligen Druckfeder verschiebbar gelagerte Rastmittel aufweisen. Die Rastmittel haben eine an eine Rastkontur des anderen Halteteils angepasste und bei Einwirkung einer Betätigungskraft aus der Rastkontur herausbewegbare Kontur.

Die Rastmittel können als Kugelelemente oder in der Druckfeder aufgenommene Stößel mit einer teilkreisförmigen Außenfläche als Kontur ausgebildet sein.

Die Druckfedern ermöglichen zusammen mit den hierdurch radial beweglichen Rastmittel eine kompakte Bauweise, die den verfügbaren radialen Bauraum optimal ausnutzt.

Der unbestimmte Begriff "ein" ist als solcher und nicht als Zahlwort zu verstehen. So ist auch denkbar, dass an der Vorrichtung zur Aufnahme eines Behälters mehr als eine Rastlasche, insbesondere zwei, drei oder vier Rastlaschen, angeordnet sind. Weiterhin ist denkbar, dass das Gehäuse auch ein drittes Gehäuseteil und/oder ein viertes Gehäuseteil aufweist.

Die Erfindung wird nachfolgend anhand von Ausführungsbeispielen beispielhaft mit den beigefügten Zeichnungen näher erläutert. Es zeigen:
- Figur 1 -: eine perspektivische Ansicht einer Behälteraufnahmevorrichtung mit geöffnetem Deckelteil;
- Figur 2 -: eine Behälteraufnahmevorrichtung nach Figur 1 mit einem eingesetzten Behälter;
- Figur 3 -: eine Behälteraufnahmevorrichtung nach Figur 2 in einer Geschlossenstellung;
- Figur 4 -: eine Behälteraufnahmevorrichtung nach Figur 1 bis 3 mit einem von Figur 2 unterschiedlichen großen Behälter;
- Figur 5 -: eine erfindungsgemäße Halterung in perspektivischer Ansicht;
- Figur 6 -: eine Halterung nach Figur 5 in Draufsicht;
- Figur 7 -: eine Halterung nach den Figuren 5 und 6 in Draufsicht;
- Figur 8 -: eine Explosionsansicht einer Behälteraufnahmevorrichtung und einer Halterung in perspektivischer Ansicht.

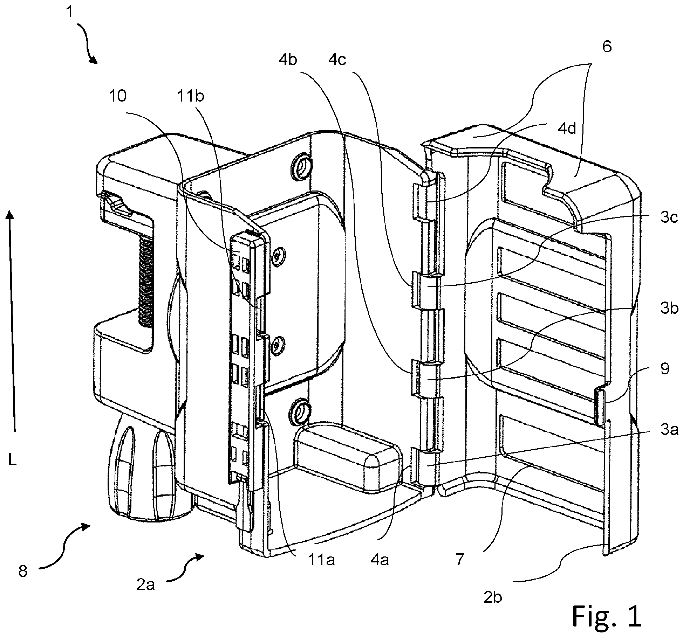

Figur 1 zeigt eine Behälteraufnahmevorrichtung 1 mit einem ersten Gehäuseteil in Form eines Behälterträgers 2a und einem zweiten Gehäuseteil in Form eines Deckelteils 2b. An dem Deckelteil 2b sind drei Rastlaschen 3a, 3b, 3c angeordnet, die jeweils in ein entsprechendes Rastlager 4a, 4b, 4c des Behälterträgers 2a eingreifen. Das Deckelteil 2b ist somit durch die Rastlaschen 3a, 3b, 3c an dem Behälterträger 2b verrastet. Deutlich wird, dass die Rastlaschen 3a, 3b, 3c scharnierartig ausgebildet sind, so dass das Deckelteil 2b relativ zu dem Behälterträger 2b verschwenkbar ist.

Deutlich wird, dass die Rastlaschen 3a, 3b, 3c und die Rastlager 4a, 4b, 4c, 4d in Längserstreckungsrichtung L der Behälteraufnahmevorrichtung 1 hintereinander angeordnet sind. Die Längserstreckungsrichtung L ist dabei die Richtung, in der sich die Behälteraufnahmevorrichtung 1 mit seinem größten Abmaß erstreckt. Dies ist in dem dargestellten Beispiel die Richtung der Höhe gesehen vom Boden 5 des Behälterträgers 2a.

Zu erkennen ist, dass sich die Behälteraufnahmevorrichtung 1 in einer Offenstellung befindet. Das bedeutet, dass ein Behälter B in den Raum zwischen dem Behälterträger 2a und dem Deckelteil 2b einsetzbar ist.

Weiterhin deutlich wird, dass an dem Behälterträger 2a eine größere Anzahl an Rastlagern 4a, 4b, 4c, 4d in einer gemeinsamen Flucht angeordnet sind, als die Anzahl an Rastlaschen 3a, 3b, 3c, die in einer gemeinsamen Flucht an dem Deckelteil 2b angeordnet sind. Die Rastausnehmung 4d ist nicht mit einer entsprechenden Rastlasche verrastet und ist in der dargestellten Rastposition ungenutzt. Auf diese Weise kann die Lage des Deckelteils 2b relativ zu dem Behälterträger 2a in der Längserstreckungsrichtung L variabel eingestellt werden, indem die Rastlaschen 3a, 3b, 3c in die Rastausnehmungen 4b, 4c, 4d umgesteckt werden würden. Der Raum zwischen dem Behälterträger 2a und dem Deckelteil 2b würde somit vergrößert werden, wobei ein größerer Behälter 5 zwischen dem Behälterträger 2a und dem zweiten Deckelteil 2b anordbar ist.

Erkennbar ist, dass das Deckelteil 2b einen Kragen 6 hat, der in dem auf den Behälterträger 2a aufgerasteten Zustand in Richtung des Behälterträgers 2a von der frontseitigen Hauptebene des Deckelteils 2b abragt. Dieser Kragen 6 ist in der dargestellten Rastposition direkt mit geringstmöglichem Abstand oberhalb der Oberkante des Behälterteils 2a positioniert und begrenzt den Aufnahmeraum des Behälterträgers 2a nach oben hin, d. h. auf der dem Boden 5 gegenüberliegenden Seite.

Wenn nun das Deckelteil 2b in Längsrichtung L nach oben hin umgesteckt wird, wird der Abstand des Kragens 6 zur Oberkante des Behälterträgers 2a um ein Abstandsmaß der Rastlaschen 3a, 3b, 3c voneinander vergrößert. Damit kann ein maximal um dieses Maß größerer Behälter B in der Behälteraufnahmevorrichtung 1 aufgenommen und mit dem Deckelteil 2b an dem Behälterträger 2a gesichert werden.

Deutlich wird, dass die Rastlaschen 3a, 3b, 3c und in entsprechender Weise die Rastlager 4a, 4b, 4c jeweils in einer gemeinsamen Flucht in Längserstreckungsrichtung L in einem gleichen Abstandsmaß zwischen zwei benachbarten Rastlaschen 3a-3b; 3b-3c bzw. zwischen zwei benachbarten Rastlagern 4a-4b; 4b-4c; 4c-4d angeordnet sind.

Weiterhin ist zu erkennen, dass an dem Deckelteil 2a optional eine Vielzahl von Sichtfenstern 7 angeordnet ist. Durch die Sichtfenster 7 wird es ermöglicht, zum Beispiel den Füllstand des Behälters 5 zu überwachen.

**In** dem dargestellten Ausführungsbeispiel ist der Behälterträger 2a mit einer Halteklaue 8 verschraubt. Diese Halteklaue 8 ermöglicht es, die Behälteraufnahmevorrichtung 1 an einem Haltesteg oder Träger festzuspannen und damit lösbar zu befestigen. Eine solche Halteklaue 8 ist auch unter der Bezeichnung Spannelement oder Schnellspannklaue bekannt. Optional kann der Behälterträger 2a aber auch mit anderen Trägermitteln verbunden werden. Hierzu kann der Behälterträger 2a beispielsweise an eine Wand oder einen Träger geschraubt werden.

Erkennbar ist weiterhin, dass der Behälterträger 2a und das Deckelteil 2b an der Stirnseite, die dem aus den Rastlaschen 3a, 3b, 3c und Rastlagern 4a, 4b, 4c, 4d gebildeten Scharniergelenk gegenüberliegt, Verriegelungselemente haben. Beispielsweise ragt von dem Deckelteil 2b in Richtung des Behälterträgers 2a eine Verriegelungslasche 9 mit einer vorspringenden Rastnase (Rastwulst) ab. An dem Behälterträger 2a ist ein in Längserstreckungsrichtung linear beweglich gelagerter Verriegelungsschieber 10 vorhanden, der mehrere in einer Flucht in dem Abstandsmaß der Rastelemente angeordnete Ausnehmungen 11a, 11b hat. Eine der Ausnehmungen 11a befindet sich in der dargestellten entriegelten Position in Längserstreckungsrichtung L auf der Höhe der korrespondierenden Verriegungslasche 9, die beim Zuklappen des Deckelteils 2b in die Ausnehmung 11a eintauchen kann. Nach einer Längsverschiebung übergreift der Verriegelungsschieber 10 mit seinem an die Ausnehmung 11a angrenzenden Kragen (d. h. ihrer Seitenwand) die Rastnase der Verriegelungslasche 9, um auf diese Weise das Deckelteil 2b an dem Behälterträger 2a zu verriegeln.

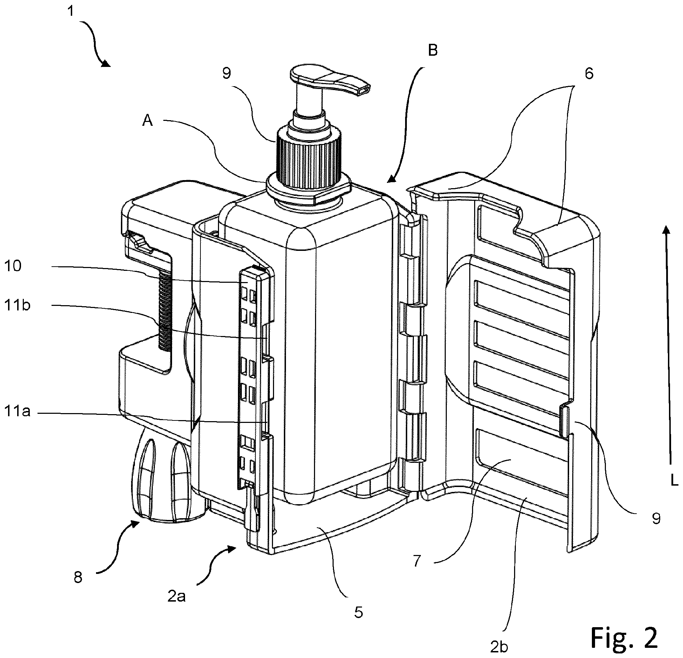

Figur 2 zeigt die Behälteraufnahmevorrichtung 1 aus Figur 1 mit einem in den Behälterträger 2a eingesetzten Behälter B. Der Behälterträger 2a kann hierzu eine an die Kontur des Behälters B angepasste Kontur haben, wie beispielsweise die in Figur 1 erkennbaren rechteckförmigen Stufen am Übergang des Bodens 5 zu den Seitenwänden.

Deutlich wird, dass ein Behälter B in dem Raum zwischen dem Behälterträger 2a und dem Deckelteil 2b aufgenommen ist. Der Behälter B ist dabei beispielhaft als Desinfektionsmittelspender ausgebildet. Er hat an seiner Oberseite einen Auslass A, an dem eine Pumpvorrichtung mit Auslasshahn angeordnet ist. Es sind aber auch andere Behälter 5 zur Aufnahme zwischen dem Behälterträger 2a und dem Deckelteil 2b denkbar, wie z. B. ein Tropf o. ä.

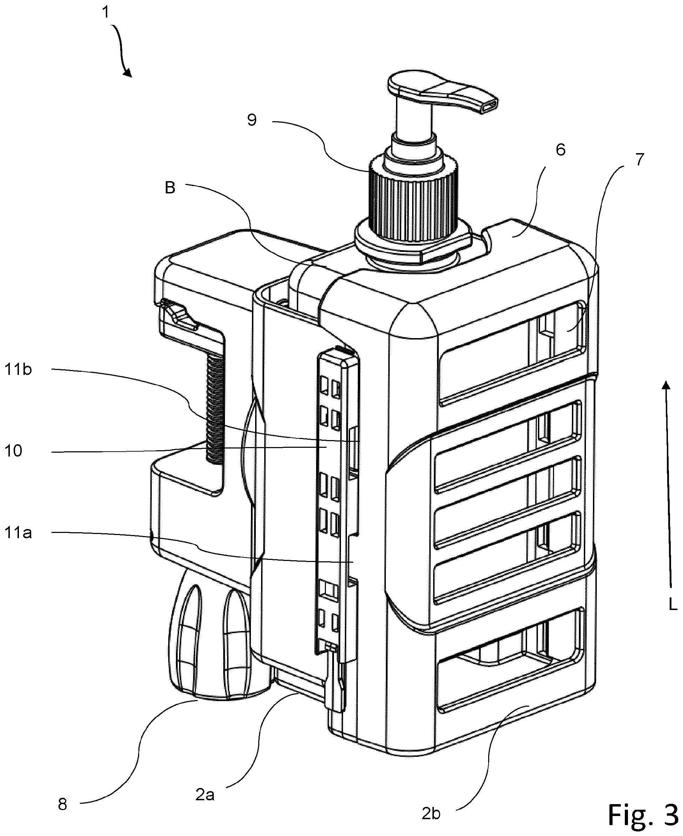

Figur 3 zeigt die Behälteraufnahmevorrichtung 1 aus Figur 2 in einer geschlossenen Stellung, bei der das Deckelteil 2b auf den Behälterträger 2a geklappt ist. Das Deckelteil 2a ist derartig mit dem Behälterträger 2b verbunden, dass der Behälter B nicht mehr ohne eine Einwirkung von außen entfernt oder eingesetzt werden kann. Hierzu überragt der Kragen 6 des Deckelteils 2a die den Auslass A aufweisende Oberseite des Behälters B. Der Behälter B wird in dem Raum zwischen dem Behälterträger 2a und dem Deckelteil 2b vor Herausfallen und Herausnahme gesichert.

Deutlich wird, dass das Deckelteil 2a einen Kragen 6 mit einer den Auslassstutzen des Auslasses A aufnehmenden Mulde M hat, wodurch ein Entfernen des Behälters B in Längserstreckungsrichtung L der Behälteraufnahmevorrichtung 1 verhindert wird. Der Kragen 6 begrenzt damit die Behälteraufnahmevorrichtung 1 in der Längserstreckungsrichtung L nach oben, d. h. an der von Boden 5 abgewandten Seite hin.

Deutlich wird, dass an der Behälteraufnahmevorrichtung 1 Verschlusselemente angeordnet sind, die den Verriegelungsschieber 10 am Behälterträger 2a und die Verriegelungslasche 9 an dem Deckelteil 2b umfassen. Der Verriegelungsschieber 10 wird dabei derart über die Verriegelungslasche 9 geschoben, dass die Verriegelungslasche 9 in eine Ausnehmung 11a, 11b des Verriegelungsschiebers 10 eintaucht und der Kragen des Verriegelungsschiebers 10 nach Verschiebung des Verriegelungsschiebers 10 einen Anschlag für die Rastnase der Verriegelungslasche 9 bildet.

Das Deckelteil 2b kann somit nicht mehr ohne äußere Einwirkung von dem Behälterträger 2a gelöst werden. Somit kann ein unbeabsichtigtes Öffnen der Behälteraufnahmevorrichtung 1 vermieden werden.

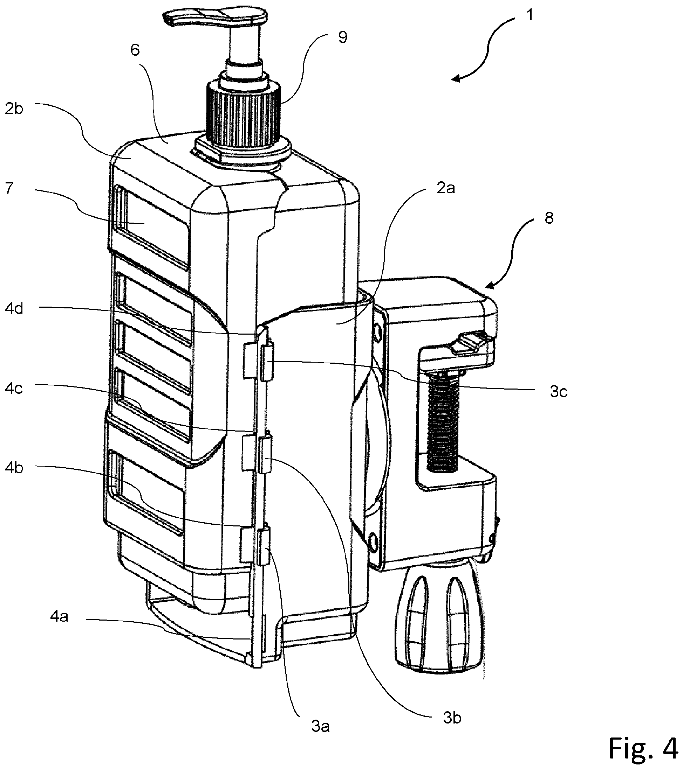

Figur 4 zeigt die Behälteraufnahmevorrichtung 1 aus Figur 3 in perspektivischer Seitenansicht mit einer im Vergleich zu Figur 3 nach oben hin versetzten Anordnung des Deckelteils 2b an dem Behälterträger 2a. Dabei wird deutlich, dass die Rastlaschen 3a, 3b, 3c wiederum in die Rastlager 4b, 4c, 4d eingreifen, so dass ein Scharniergelenk bzw. Schwenklager gebildet wird. Das Deckelteil 2b ist nun jedoch so versetzt angeordnet, dass der Kragen 6 im Vergleich zu Figur 3 bezogen auf die Oberkante des Behälterträgers um ein Abstandsmaß nach oben versetzt angeordnet ist. Damit wird der verfügbare Aufnahmeraum zwischen dem Boden 5 des Behälterträgers 2a und dem Kragen 6 des Deckelteils 2b größer. Das dem Boden 5 am Nächsten liegende Rastlager 4a wird entsprechend nicht von einer der Rastlaschen 3a, 3b, 3c umgriffen und bleibt ungenutzt.

In der Steckposition aus Figur 3 wird hingegen das dem Boden 5 am Entferntest liegende Rastlager 4a nicht von einer der Rastlaschen 3a, 3b, 3c umgriffen und bleibt ungenutzt.

In der Vorrichtung nach Figur 4 ist im Unterschied zu den Figuren 2 und 3 ein größerer Behälter B eingesetzt. Größer bedeutet insbesondere ein Behälter mit mehr Volumen. In dem dargestellten Ausführungsbeispiel wird die Variation der Volumina der Behälter B durch unterschiedliche Höhen der Behälter B erreicht.

Die Behälteraufnahmevorrichtung 1 nach den Figuren 1 bis 4 hat unabhängig von dem eingesetzten Behälter B den gleichen Aufbau. Deutlich wird, dass die Behälteraufnahmevorrichtung 1 an einer als Halteklaue 8 ausgebildetes Spannelement angeordnet ist. Durch die Anordnung an einer Halteklaue 8 kann die Behälteraufnahmevorrichtung 1 flexibel montiert und demontiert werden. Insbesondere bei häufig wechselnden Einsatzorten bzw. Montageorten wird somit die Handhabung verbessert.

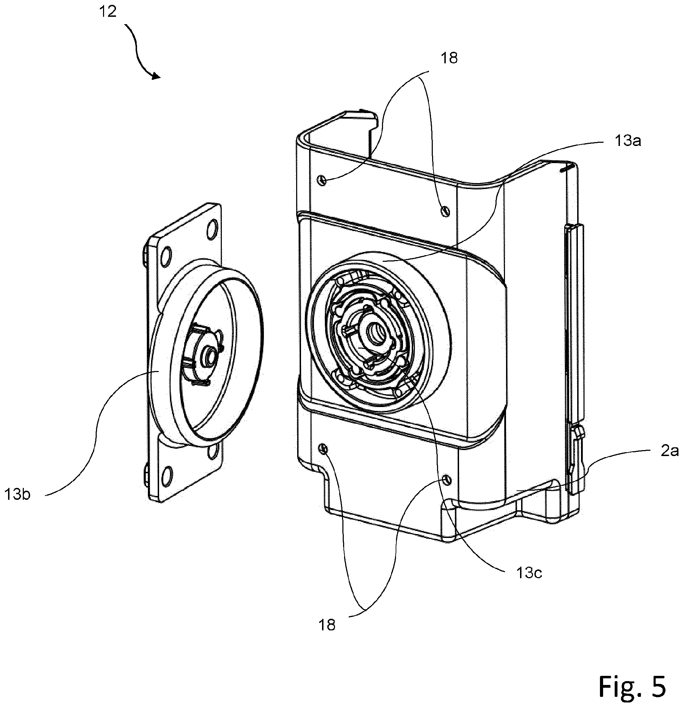

Figur 5 zeigt eine Halterung 12, die insbesondere zur Montage an der vorher beschriebenen Behälteraufnahmevorrichtung 1 vorgesehen ist, in einer perspektivischen Ansicht. Die Halterung 12 hat ein erstes Halteteil 13a zur Befestigung der Halterung 12 an einer Behälteraufnahmevorrichtung 1 nach den Figuren 1 bis 4.

Das erste Halteteil 13a kann dabei an dem Behälterträger 2a der Behälteraufnahmevorrichtung 1 nach den Figuren 1 bis 4 z.B. durch Verschrauben befestigt sein.

Weiterhin hat die Halterung 12 ein zweites Halteteil 13b und ein Anschlagelement 13c, wobei das zweite Halteteil 13b zur weiteren Befestigung, zum Beispiel an einer Halteklaue 8, einem Träger oder einer Gebäudewand o. ä. dient.

Das Anschlagelement 13c ist drehfest mit dem zweiten Halteteil 13b verbunden, so dass keine Relativbewegung zwischen diesen Bauteilen möglich ist. Dies kann zum Beispiel durch eine formschlüssige Steckverbindung, durch eine Schraubverbindung oder durch eine einstückige (d. h. integrale) Ausbildung von zweitem Halteteil 13b und Anschlagelement 13c erreicht werden. Zur besseren Übersicht sind das Anschlagelement 13c und das zweite Halteteil 13b in der Explosionsdarstellung von Figur 5 aber als nicht einstückig und in dem Zustand voneinander gelöst dargestellt.

Das erste Halteteil 13a und das Anschlagelement 13c sind derart miteinander verbunden, dass das erste Halteteil 13a relativ zu dem Anschlagelement 13c beweglich ausgebildet ist. Das erste Halteteil 13a ist insbesondere um das Anschlagelement 13c drehbar ausgebildet, so dass die Winkelposition des Anschlagelementes 13c und des ersten Halteteils 13a durch Rotation der beiden Teile relativ zueinander veränderbar ist.

Erkennbar ist weiterhin, dass an der Basisfläche des Behälterträgers 2a vier ein Rechteck aufspannende Wandbefestigungsbohrungen 18 angeordnet sind. Damit lässt sich der Behälterträger 2a optional auch an einen Träger oder eine Wand verschrauben, insbesondere wenn das erste Halteteil 13a von dem Basisteil 13a abgeschraubt ist.

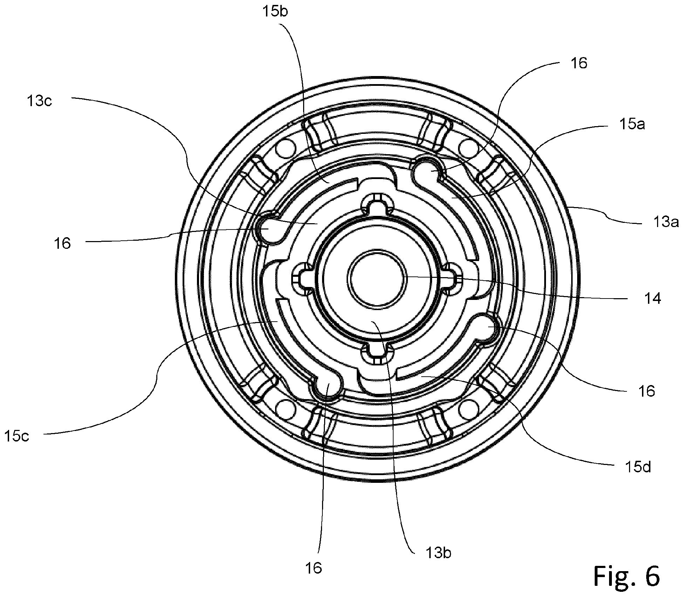

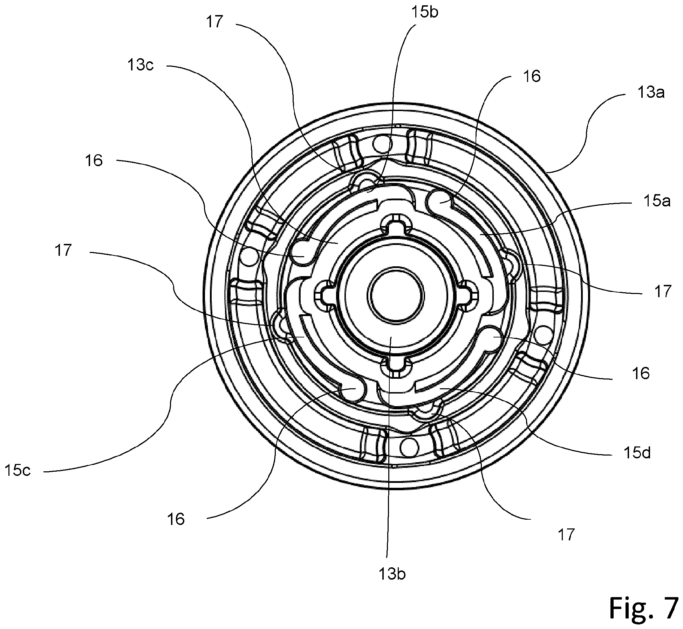

Die Figuren 6 und 7 zeigen die Halterung 12 nach Figur 5 in einer Draufsicht, wobei das erste Halteteil 13a und das Anschlagelement 13c in den Figuren 6 und 7 in unterschiedlichen Positionen zueinander angeordnet sind. Das Anschlagelement 13c und das zweite Halteteil 13 b sind über eine Schraube 14 miteinander fest verbunden sind. Dabei ist aber auch die Anwendung jedes gängiges Befestigungselement wie zum Beispiel einer Nietverbindung als alternative Befestigung denkbar.

Zu erkennen ist, dass das Anschlagelement 13c kreisförmig ausgebildet ist, wobei über den Umfang des Anschlagelementes 13c vier Federlaschen 15a, 15b, 15c, 15d angeordnet sind. Die Federlaschen 15a, 15b, 15c, 15d sind dabei in einem gleichen Abstand zueinander angeordnet, so dass in Bezug auf den kreisförmigen Umfang des Anschlagelementes 13c gesehen die Federlaschen 15a, 15b, 15c, 15d in einem Abstand von 90° zueinander angeordnet sind.

Aus den Figuren 6 und 7 wird deutlich, dass die Federlaschen 15a, 15b, 15c, 15d elastisch auslenkbar sind, wobei die Federlaschen 15a, 15b, 15c, 15d an ihrem freien Ende angeordnete Rastköpfe 16 haben, die in korrespondierende Rastkonturen 17 (d. h. in Rastmulden) des ersten Halteteils 13a eingreifen und dort verrasten können. Deutlich wird, dass die Rastköpfe 13 der Federlaschen 15a, 15b, 15c, 15d jeweils mit jeder der Rastkonturen 17 verrasten können. Die Rastkonturen 17 sind dabei als zu den Rastköpfen 16 korrespondierende Ausschnitte ausgebildet, die die Negativ-Kontur der Rastköpfe 16 abbilden.

Durch die elastisch auslenkbaren Federlaschen 15a, 15b, 15c, 15d kann der erste Halteabschnitt 13a relativ zu dem Anschlagelement 13c um den Umfang des kreisförmigen Anschlagelementes 13c verdreht werden, so dass zum Beispiel eine Behälteraufnahmevorrichtung 1 nach den Figuren 1 bis 4 in vier unterschiedliche Positionen verdreht werden kann. Dies kann zum Beispiel die Flexibilität der Behälteraufnahmevorrichtung 1 im Hinblick der Einsatzmöglichkeiten erhöhen. Damit kann beispielsweise die Lage des Auslasses A an die jeweilige Befestigungsposition der Halteklaue 8 angepasst werden. Der Auslass A eines Tropfes kann auch auf einfache und schnelle Weise aus der Überkopflage des Betriebszustandes in die um 180° gedrehte Ruhelage gebracht werden.

Der erste Halteabschnitt 13a ist ausreichend durch die Federkraft der Federlaschen 15a, 15b, 15c, 15d an das Anschlagelement 13c angebunden, so dass keine zusätzlichen Befestigungen notwendig sind.

Weiterhin wird deutlich, dass die Federlaschen 15a, 15b, 15c, 15d im Wesentlichen parallel zu dem kreisförmigen Umfang des Anschlagelementes 13c von dem Anschlagelement 13c bogenförmig abragen, so dass eine kompakte Halterung 12 bereitgestellt werden kann. Im Wesentlichen parallel bedeutet, dass die Federlaschen 15a, 15b, 15c, 15d im gleichen Abstand zu dem kreisförmigen Anschlagelement 13c verlaufen.

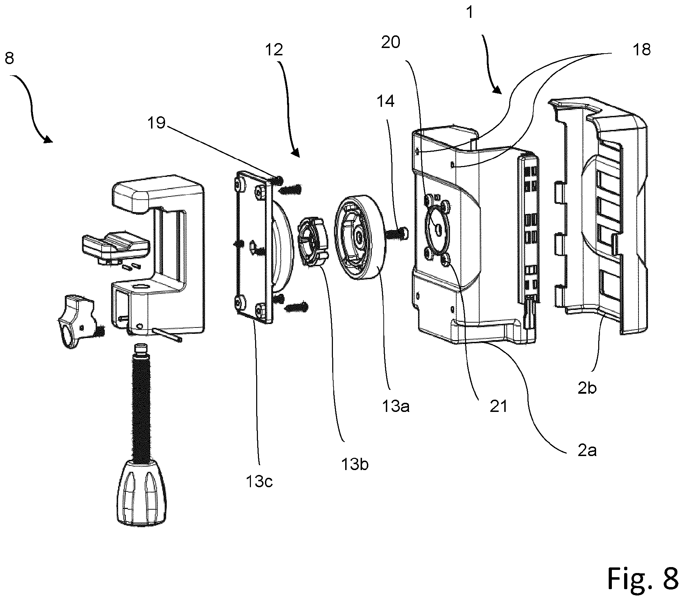

Figur 8 zeigt eine Explosionsansicht einer Vorrichtung 1 nach den Figuren 1 bis 4 und einer Halterung 12 nach den Figuren 5 bis 7. Deutlich wird der modulare Aufbau der Behälteraufnahmevorrichtung 1 und der Halterung 12. Die Behälteraufnahmevorrichtung 1 kann dabei über die Halterung 12 mit einer Halteklaue 8 verbunden sein, wodurch sich ein breites Einsatzspektrum der Behälteraufnahmevorrichtung 1 ergibt.

Erkennbar sind die Wandbefestigungsbohrungen 18 an dem Behälterträger 13a. Der Befestigungsträger 2a hat zudem eine zentrale Befestigungsöffnung 20 zur Aufnahme der Schraube 14, die das erste Halteteil 13a durch Formschluss mit ihrem Schraubenkopf an dem Behälterträger 2a befestigt. Die zentrale Befestigungsöffnung 20 ist durch vier vorspringende Kuppen 21 umgeben, die in korrespondierende Öffnungen im ersten Halteteil 13a eintauchen und einen Verdrehschutz bilden.

Das zweite Halteteil 13c wird mittels Befestigungsschrauben 19 mit seiner bspw. Rechteckförmigen Plattform mit der Halteklaue 8 verschraubt.

### Bezugszeichenliste

- 1: Vorrichtung
- 2a: Behälterträger
- 2b: Deckelteil
- 3a, 3b, 3c: Rastlasche
- 4a, 4b, 4c, 4d: Rastlager
- 5: Boden
- 6: Kragen
- 7: Sichtfenster
- 8: Halteklaue
- 9: Verriegelungslasche
- 10: Verriegelungsschieber
- 11a, 11b: Ausnehmung
- 12: Halterung
- 13a: erstes Halteteil
- 13b: zweites Halteteil
- 13c: Anschlagelement
- 14: Schraube
- 15a, 15b, 15c, 15d: Federlaschen
- 16: Rastkopf
- 17: Rastkontur
- 18: Wandbefestigungsbohrungen
- 19: Befestigungsschrauben
- 20: zentrale Befestigungsöffnung
- 21: Kuppen
- A: Auslass
- B: Behälter
- M: Mulde
- L: Längserstreckungsrichtung

## Patentansprüche

1. Behälteraufnahmevorrichtung (1) zur Aufnahme eines Behälters (B), wobei die Behälteraufnahmevorrichtung (1) ein erstes Gehäuseteil in Form eines Behälterträgers (2a) und ein zweites Gehäuseteil in Form eines Deckelteils (2b) aufweist, wobei der Behälter (B) in dem Behälterträger (2a) aufnehmbar und mit dem im zugeklappten Zustand den Behälter (B) frontseitig abdeckenden Deckelteil (2b) an dem Behälterträger (2a) festlegbar ist, wobei der Behälterträger (2a) und das Deckelteil (2b) miteinander zusammenwirkende Rastelemente haben, die als Rastlaschen (3a, 3b, 3c) und dazu passende Rastlager (4a, 4b, 4c) ausgebildet sind, **dadurch gekennzeichnet, dass** zumindest eines der beiden Gehäuseteile mehrere in einer gemeinsamen Flucht im Abstand voneinander angeordnete Rastelemente hat, die jeweils zur Verrastung eines Paares von Rastlasche (3a, 3b, 3c) und Rastlasche (4a, 4b, 4c, 4d) ausgebildet sind, wobei an dem Behälterträger (2a) oder an dem Deckelteil (2b) eine erste Anzahl von Rastlaschen (3a, 3b, 3c) in einer gemeinsamen Flucht in einem gleichen Abstandsmaß zwischen zwei benachbarten Rastlaschen (3a, 3b, 3c) angeordnet ist und an dem jeweils anderen Gehäuseteil (2a, 2b) eine zur ersten Anzahl von Rastlaschen (3a, 3b, 3c) größere Anzahl an Rastlagern (4a, 4b, 4c, 4d) in einer gemeinsamen Flucht in einem gleichen Abstandsmaß zwischen zwei benachbarten Rastlagern (4a, 4b, 4c, 4d) angeordnet ist und das Deckelteil (2b) wahlweise in unterschiedlichen Kombinationen jeweils eines Rastelementes eines Gehäuseteils mit dem dazu passenden Rastelement der in einer Flucht im Abstand voneinander angeordneten Rastelementen des anderen Gehäuseteils zusammensteckbar ist, so dass die Lage der Oberkante des Deckelteils (2b) in Bezug auf die Oberkante des Behälterträgers (2a) in Richtung der Flucht der mehreren im Abstand voneinander angeordneten Rastelemente veränderbar ist, und dass das Deckelteil (2b) einen im auf den Behälterträger (2a) aufgesteckten und zugeklappten Zustand zum Behälterträger (2a) hin ragenden Kragen (6) hat, um einen aufgenommen Behälter (B) in Richtung der Flucht festzulegen.

2. Behälteraufnahmevorrichtung (1) nach einem der vorhergehenden Ansprüche, **dadurch gekennzeichnet, dass** die Rastlaschen (3a, 3b, 3c) und die Rastlager (4a, 4b, 4c, 4d) derart ausgebildet sind, dass das Deckelteil (2b) in Bezug auf den Behälterträger (2a) verschwenkbar an dem Behälterträger (2a) anrastbar ist.

3. Behälteraufnahmevorrichtung (1) nach Anspruch 2, **dadurch gekennzeichnet, dass** eines der Gehäuseteile eine Mehrzahl von in einer gemeinsamen Flucht im Abstand voneinander angeordneten Rastlagern (4a, 4b, 4c, 4d) hat, die Ausnehmungen in diesem Gehäuseteil zur Aufnahme jeweils einer Rastlasche (3a, 3b, 3c) und eine Scharnierachse haben, wobei die mindestens eine Rastlasche (3a, 3b,3c) des anderen Gehäuseteils in Form einer Scharnierbuchse ausgebildet ist, die mindestens eine Scharnierachse mindestens teilweise umgreift und ein Scharniergelenk bildet.

4. Behälteraufnahmevorrichtung (1) nach einem der vorhergehenden Ansprüche, **dadurch gekennzeichnet, dass** der Behälterträger (2a) und das Deckelteil (2b) an der den Rastelementen gegenüberliegenden Stirnseite Verriegelungselemente (9, 10) hat, die zur Verriegelung des Deckelteils (2b) an dem Behälterträger (2a) in dem auf den Behälterträger (2b) aufgesetzten und zugeklappten Zustand des Deckelteils (2a) ausgebildet sind.

5. Behälteraufnahmevorrichtung (1) nach einem der vorhergehenden Ansprüche, **dadurch gekennzeichnet, dass** der Behälterträger (2a) wenigstens ein erstes Befestigungselement zur Befestigung des Behälterträgers (2a) an einer Halteklaue (8) und wenigstens ein zweites Befestigungselement zur Befestigung des Behälterträgers (2a) an einer Wand hat.

6. Behälteraufnahmevorrichtung (1) nach einem der vorhergehenden Ansprüche mit einer Halterung (12) zur variablen Fixierung der Behälteraufnahmevorrichtung (1), wobei die Halterung (12) ein erstes Halteteil (13a), das an der Behälteraufnahmevorrichtung (1) befestigt ist, ein zweites Halteteil (13b) und mindestens ein Anschlagelement (13c) aufweist, **dadurch gekennzeichnet, dass** das mindestens eine Anschlagelement (13c) ein federelastisches, bewegliches Rastelement aufweist und mit einem der Halteteile (13a, 13b) drehfest verbindbar oder verbunden ist, und dass das andere Halteteil (13b, 13a) eine Mehrzahl von Rastkonturen (17) hat, wobei die beiden Halteteile (13a, 13b) miteinander verbunden und über eine gemeinsame Drehachse relativ zueinander verdrehbar angeordnet sind, wobei die Halteteile (13a, 13b) wahlweise in mehreren Rastpositionen durch Eingriff jeweils eines federelastisch beweglichen Rastelementes in eine der Rastkonturen (17) miteinander verrastbar sind.

7. Behälteraufnahmevorrichtung (1) nach Anspruch 6, **dadurch gekennzeichnet, dass** die Rastelemente in einem gleichen Abstand voneinander um den Umfang des Anschlagelementes (13c) verteilt angeordnet sind.

8. Behälteraufnahmevorrichtung (1) nach Anspruch 6 oder 7, **dadurch gekennzeichnet, dass** das Anschlagelement (13c) kreisförmig ausgebildet ist und über den Umfang verteilt angeordnete elastisch auslenkbare Federlaschen (15a, 15b, 15c, 15d) hat, welche die federelastischen, beweglichen Rastelemente bilden, wobei die Federlaschen (15a, 15b, 15c, 15d) jeweils mit korrespondierenden Rastkonturen (17) des ersten Halteteils (13a) verrastbar sind.

9. Behälteraufnahmevorrichtung (1) nach Anspruch 8, **dadurch gekennzeichnet, dass** an dem Anschlagelement (13c) über den Umfang verteilt vier elastisch auslenkbare Federlaschen (15a, 15b, 15c, 15d) angeordnet sind.

10. Behälteraufnahmevorrichtung (1) nach einem der Ansprüche 7 bis 9, **dadurch gekennzeichnet, dass** die elastisch auslenkbaren Federlaschen (15a, 15b, 15c, 15d) bogenförmig von dem Anschlagelement (13c) abragen.

11. Behälteraufnahmevorrichtung (1) nach Anspruch 10, **dadurch gekennzeichnet, dass** die elastisch auslenkbaren Federlaschen (15a, 15b, 15c, 15d) im Wesentlichen parallel zum Anschlagelement (13c) von dem Anschlagelement (13c) abragen.

12. Behälteraufnahmevorrichtung (1) nach Anspruch 6 oder 7, **dadurch gekennzeichnet, dass** die Rastelemente Druckfedern haben, die in einem der Haltteile (13a, 13b) gelagert sind, und an den Druckfedern angeordnete und bei der federelastischen Auslenkung der jeweiligen Druckfeder verschiebbar gelagerte Rastmittel aufweisen, wobei die Rastmittel eine an eine Rastkontur des anderen Halteteils (13b, 13a) angepasste und bei Einwirkung einer Betätigungskraft aus der Rastkontur herausbewegbare Kontur haben.

13. Behälteraufnahmevorrichtung (1) nach Anspruch 12, **dadurch gekennzeichnet, dass** die Rastmittel als Kugelelemente oder in der Druckfeder aufgenommene Stößel mit einer teilkreisförmigen Außenfläche als Kontur ausgebildet sind.

14. Behälteraufnahmevorrichtung (1) nach einem der Ansprüche 6 bis 13, **dadurch gekennzeichnet, dass** das zweite Halteteil (13b) an einer Halteklaue (8) montiert ist.

## Claims

1. Container receiving device (1) for receiving a container (B), the container receiving device (1) having a first housing part in the form of a container carrier (2a) and a second housing part in the form of a cover part (2b), wherein the container (B) can be accommodated in the container carrier (2a) and can be secured to the container carrier (2a) by the lid part (2b) which covers the front of the container (B) in the closed state, wherein the container carrier (2a) and the lid part (2b) have latching elements which interact with one another, which are designed as latching tabs (3a, 3b, 3c) and matching latching bearings (4a, 4b, 4c), **characterized in that** at least one of the two housing parts has a plurality of latching elements arranged in a common alignment at a distance from one another , which are each designed for latching a pair of latching tabs (3a, 3b, 3c) and latching tabs (4a, 4b, 4c, 4d), a first number of latching tabs (3a, 3b, 3c) is arranged in a common alignment at an equal distance between two adjacent latching lugs (3a, 3b, 3c) on the container carrier (2a) or on the lid part (2b), and a number of latching bearings (4a, 4b, 4c, 4d) greater than the first number of latching lugs (3a, 3b, 3c) is arranged in a common alignment at an equal distance between two adjacent latching bearings (4a, 4b, 4c, 4d) on the respective other housing part (2a, 2b) and the cover part (2b) can optionally be plugged together in different combinations of a latching element of one housing part with the matching latching element of the latching elements of the other housing part arranged in an alignment at a distance from one another, so that the position of the upper edge of the lid part (2b) can be changed in relation to the upper edge of the container carrier (2a) in the direction of the alignment of the plurality of spaced-apart latching elements, and **in that** the lid part (2b) has a collar (6) projecting towards the container carrier (2a) when it is fitted onto the container carrier (2a) and folded shut, in order to secure a container (B) received in the direction of the alignment.

2. Container receiving device (1) according to one of the preceding claims, **characterized in that** the latching tabs (3a, 3b, 3c) and the latching bearings (4a, 4b, 4c, 4d) are designed such that the lid part (2b) can be latched to the container carrier (2a) so as to be pivotable with respect to the container carrier (2a).

3. Container receiving device (1) according to claim 2, **characterized in that** one of the housing parts has a plurality of latching bearings (4a, 4b, 4c, 4d) which are arranged at a distance from one another in a common alignment and which have recesses in this housing part for receiving in each case one latching tab (3a, 3b, 3c) and a hinge axis, wherein the at least one latching tab (3a, 3b, 3c) of the other housing part is designed in the form of a hinge bush which at least partially embraces at least one hinge axis and forms a hinge joint.

4. Container receiving device (1) according to one of the preceding claims, **characterized in that** the container carrier (2a) and the lid part (2b) have locking elements (9, 10) on the end face opposite the latching elements, which are designed for locking the lid part (2b) to the container carrier (2a) in the state of the lid part (2a) placed on the container carrier (2b) and folded shut.

5. Container receiving device (1) according to one of the preceding claims, **characterized in that** the container carrier (2a) has at least one first fastening element for fastening the container carrier (2a) to a retaining claw (8) and at least one second fastening element for fastening the container carrier (2a) to a wall.

6. Container receiving device (1) according to one of the preceding claims, having a holder (12) for variable fixing of the container receiving device (1), the holder (12) having a first holding part (13a), which is fastened to the container receiving device (1), a second holding part (13b) and at least one stop element (13c), **characterized in that** the at least one stop element (13c) has a resilient, movable latching element and can be connected or is connected in a torsion-resistant manner to one of the holding parts (13a, 13b), and **in that** the other holding part (13b, 13a) has a plurality of latching contours (17), the two holding parts (13a, 13b) being connected to one another and being arranged so as to be rotatable relative to one another about a common axis of rotation, the holding parts (13a, 13b) can be selectively latched to one another in a plurality of latching positions by engagement of a respective resiliently movable latching element in one of the latching contours (17).

7. Container receiving device (1) according to claim 6, **characterized in that** the latching elements are arranged at an equal distance from one another around the circumference of the stop element (13c).

8. Container receiving device (1) according to claim 6 or 7, **characterized in that** the stop element (13c) is circular and has elastically deflectable spring lugs (15a, 15b, 15c, 15d) which are arranged distributed over the circumference and form the resilient, movable latching elements, wherein the spring lugs (15a, 15b, 15c, 15d) can each be latched with corresponding latching contours (17) of the first retaining part (13a).

9. Container receiving device (1) according to claim 8, **characterized in that** four elastically deflectable spring lugs (15a, 15b, 15c, 15d) are arranged on the stop element (13c) distributed over the circumference.

10. Container receiving device (1) according to one of claims 7 to 9, **characterized in that** the elastically deflectable spring lugs (15a, 15b, 15c, 15d) project from the stop element (13c) in an arcuate manner.

11. Container receiving device (1) according to claim 10, **characterized in that** the elastically deflectable spring lugs (15a, 15b, 15c, 15d) project from the stop element (13c) essentially parallel to the stop element (13c).

12. Container receiving device (1) according to claim 6 or 7, **characterized in that** the latching elements have compression springs which are mounted in one of the retaining parts (13a, 13b), and have latching means which are arranged on the compression springs and are mounted displaceably when the respective compression spring is deflected elastically, the latching means having a contour which is adapted to a latching contour of the other retaining part (13b, 13a) and can be moved out of the latching contour when an actuating force is applied.

13. Container receiving device (1) according to claim 12, **characterized in that** the latching means are designed as ball elements or plungers received in the compression spring with a partially circular outer surface as a contour.

14. Container holding device (1) according to one of claims 6 to 13, **characterized in that** the second holding part (13b) is mounted on a holding claw (8).

## Revendications

1. Dispositif de réception de récipient (1) destiné à recevoir un récipient (B), dans lequel le dispositif de réception de récipient (1) comprend une première partie de boîtier sous la forme d'un support de récipient (2a) et une deuxième partie de boîtier sous la forme d'une partie de couvercle (2b), le récipient (B) peut être reçu dans le support de récipient (2a) et être fixé au support de récipient (2a) par sa partie de couvercle (2b) qui, à l'état fermé, recouvre le récipient (B) du côté frontal, le support de récipient (2a) et la partie de couvercle (2b) présentent des éléments d'enclenchement coopérant entre eux, qui sont réalisés sous forme de pattes d'enclenchement (3a, 3b, 3c) et de paliers d'enclenchement (4a, 4b, 4c) adaptés à celles-ci,
**caractérisé en ce que** l'une au moins des deux parties de boîtier présente plusieurs éléments d'enclenchement disposés à distance les uns des autres selon un alignement commun et conçus chacun pour faire enclencher une paire constituée d'une patte d'enclenchement (3a, 3b, 3c) et d'un palier d'enclenchement (4a, 4b, 4d, 4d), sachant qu'il est prévu un premier nombre de pattes d'enclenchement (3a, 3b, 3c) sur le support de récipient (2a) ou sur la partie de couvercle (2b), disposées à distance égale les unes des autres selon un alignement commun entre deux pattes d'enclenchement (3a, 3b, 3c) voisines, et qu'il est prévu un nombre de paliers d'enclenchement (4a, 4b, 4c, 4d), supérieur au premier nombre de pattes d'enclenchement (3a, 3b, 3c), sur l'autre partie de boîtier respective (2a, 2b), disposés à distance égale selon un alignement commun entre deux paliers d'enclenchement (4a, 4b, 4c, 4d) voisins, et que la partie de couvercle (2b) peut être assemblée par enfichage, au choix selon différentes combinaisons d'un élément d'enclenchement respectif d'une partie de boîtier, avec l'élément d'enclenchement correspondant des éléments d'enclenchement de l'autre partie de boîtier disposés à distance les uns des autres selon un alignement, de sorte que la position du bord supérieur de la partie de couvercle (2b) par rapport au bord supérieur du support de récipient (2a) est variable dans le sens de l'alignement de la pluralité d'éléments d'enclenchement disposés à distance les uns des autres, et
**en ce que** la partie de couvercle (2b) possède une collerette (6) qui, à l'état fermé et enfiché sur le support de récipient (2a), fait saillie vers le support de récipient (2a) afin de fixer un récipient reçu (B) dans le sens de l'alignement.

2. Dispositif de réception de récipient (1) selon la revendication précédente, **caractérisé en ce que** les pattes d'enclenchement (3a, 3b, 3c) et les paliers d'enclenchement (4a, 4b, 4c, 4d) sont conçus de telle sorte que la partie de couvercle (2b) peut être enclenchée sur le support de récipient (2a) de manière à pouvoir pivoter par rapport au support de récipient (2a).

3. Dispositif de réception de récipient (1) selon la revendication 2,
**caractérisé en ce que** l'une des parties de boîtier présente une pluralité de paliers d'enclenchement (4a, 4b, 4c, 4d) disposés à distance les uns des autres selon un alignement commun, qui présentent des évidements dans cette partie de boîtier, destinés à recevoir chacun une patte d'enclenchement (3a, 3b, 3c), et un axe de charnière, ladite au moins une patte d'enclenchement (3a, 3b, 3c) de l'autre partie de boîtier étant réalisée sous la forme d'une douille de charnière qui entoure au moins partiellement au moins un axe de charnière et qui forme une articulation de charnière.

4. Dispositif de réception de récipient (1) selon l'une des revendications précédentes,
**caractérisé en ce que** le support de récipient (2a) et la partie de couvercle (2b) ont, sur la face frontale opposée aux éléments d'enclenchement, des éléments de verrouillage (9, 10) conçus pour verrouiller la partie de couvercle (2b) sur le support de récipient (2a) lorsque la partie de couvercle (2a) est fermée et posée sur le support de récipient (2b).

5. Dispositif de réception de récipient (1) selon l'une des revendications précédentes,
**caractérisé en ce que** le support de récipient (2a) comprend au moins un premier élément de fixation, destiné à fixer le support de récipient (2a) à une griffe de retenue (8), et au moins un deuxième élément de fixation, destiné à fixer le support de récipient (2a) à un mur.

6. Dispositif de réception de récipient (1) selon l'une des revendications précédentes, comprenant un organe de retenue (12) pour la fixation variable du dispositif de réception de récipient (1), l'organe de retenue (12) comprenant une première pièce de retenue (13a) fixée au dispositif de réception de récipient (1), une deuxième pièce de retenue (13b) et au moins un élément de butée (13c),
**caractérisé en ce que** ledit au moins un élément de butée (13c) présente un élément d'enclenchement élastique mobile et est relié ou peut être relié solidairement en rotation à l'une des pièces de retenue (13a, 13b), et **en ce que** l'autre pièce de retenue (13b, 13a) possède une pluralité de contours d'enclenchement (17), les deux pièces de retenue (13a, 13b) étant reliées l'une à l'autre et disposées de manière à pouvoir tourner l'une par rapport à l'autre autour d'un axe de rotation commun, les pièces de retenue (13a, 13b) pouvant être enclenchées l'une avec l'autre au choix dans plusieurs positions d'enclenchement par engagement d'un élément d'enclenchement élastique mobile respectif dans l'un des contours d'enclenchement (17).

7. Dispositif de réception de récipient (1) selon la revendication 6,
**caractérisé en ce que** les éléments d'enclenchement sont répartis à distance égale les uns des autres sur le pourtour de l'élément de butée (13c).

8. Dispositif de réception de récipient (1) selon la revendication 6 ou 7, **caractérisé en ce que** l'élément de butée (13c) est de forme circulaire et possède des pattes élastiques (15a, 15b, 15c, 15d) aptes à être déviées élastiquement et réparties sur le pourtour, lesquelles forment les éléments d'enclenchement élastiques mobiles, les pattes élastiques (15a, 15b, 15c, 15d) pouvant être enclenchées respectivement avec des contours d'enclenchement (17) correspondants de la première pièce de retenue (13a).

9. Dispositif de réception de récipient (1) selon la revendication 8,
**caractérisé en ce que** quatre pattes élastiques (15a, 15b, 15c, 15d) aptes à être déviées élastiquement sont réparties sur le pourtour de l'élément de butée (13c).

10. Dispositif de réception de récipient (1) selon l'une des revendications 7 à 9,
**caractérisé en ce que** les pattes élastiques (15a, 15b, 15c, 15d) aptes à être déviées élastiquement dépassent de l'élément de butée (13c) en formant un arc.

11. Dispositif de réception de récipient (1) selon la revendication 10,
**caractérisé en ce que** les pattes élastiques (15a, 15b, 15c, 15d) aptes à être déviées élastiquement dépassent de l'élément de butée (13c) sensiblement parallèlement à l'élément de butée (13c).

12. Dispositif de réception de récipient (1) selon la revendication 6 ou 7, **caractérisé en ce que** les éléments d'enclenchement possèdent des ressorts de compression montés dans l'une des pièces de retenue (13a, 13b) et présentent des moyens d'enclenchement disposés sur les ressorts de compression et montés de manière à pouvoir être déplacés lors de la déviation élastique du ressort de compression respectif, les moyens d'enclenchement présentant un contour qui est adapté au contour d'enclenchement de l'autre pièce de retenue (13b, 13a) et qui peut sortir du contour d'enclenchement sous l'action d'une force d'actionnement.

13. Dispositif de réception de récipient (1) selon la revendication 12,
**caractérisé en ce que** les moyens d'enclenchement sont réalisés comme des éléments sphériques ou des poussoirs logés dans le ressort de compression et présentant une surface extérieure sous forme de cercle partiel à titre de contour.

14. Dispositif de réception de récipient (1) selon l'une des revendications 6 à 13,
**caractérisé en ce que** la deuxième pièce de retenue (13b) est montée sur une griffe de retenue (8).
